# EUROPÄISCHE PATENTSCHRIFT

(11) **EP 0 919 930 B1**
(45) Veröffentlichungstag und Bekanntmachung des Hinweises auf die Patenterteilung: **22.10.2003**
(21) Anmeldenummer: 98121488.5
(22) Anmeldetag: 12.11.1998
(51) Int. Cl.: G06F 13/16, G06F 9/312, G06F 13/12

(54) **Verfahren und Vorrichtung zum Auslesen, Modifizieren und Überschreiben von in einer Speichereinrichtung gespeicherten Daten**
Method and apparatus for reading, modifying and writing data stored in a memory device
Méthode et dispositif de lecture, modification et écriture de données stockées dans un dispositif de mémoire

(30) Priorität: 26.11.1997 DE 19752422
(43) Veröffentlichungstag der Anmeldung: 02.06.1999
(73) Patentinhaber: Infineon Technologies AG, 81669 München (DE)
(72) Erfinder: Chapman, Michael, 81829 München (DE)
(74) Vertreter: Jannig, Peter, Dipl.-Ing.

(56) Entgegenhaltungen:
- EP-A- 0 304 540
- PATENT ABSTRACTS OF JAPAN vol. 010, no. 157 (P-464), 6. Juni 1986 (1986-06-06) & JP 61 009766 A (MATSUSHITA DENKI SANGYO KK), 17. Januar 1986 (1986-01-17)

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 4, d.h. ein Verfahren und eine Vorrichtung zum Auslesen von in einer Speichereinrichtung gespeicherten Daten, Modifizieren derselben und Überschreiben der ausgelesenen Daten durch die modifizierten Daten.

Derartige Verfahren und Vorrichtungen sind bekannt und bedürfen keiner näheren Erläuterung. Bei der Speichereinrichtung kann es sich beispielsweise, aber selbstverständlich bei weitem nicht ausschließlich um Register von Einrichtungen handeln, die sich als Peripherieeinheiten von zentralen Steuereinheiten verwenden lassen. Die genannten zentralen Steuereinheiten sind beispielsweise Mikroprozessoren, Mikrocontroller, Signalprozessoren etc.; die genannten Peripherieeinheiten können beispielsweise Timer, externe Speichermedien, durch die zentrale Steuereinheit anzusteuernden Geräte etc. sein. Die Register, die in den Peripherieeinheiten vorgesehen sind, können häufig zumindest teilweise dazu verwendet werden, um die Peripherieeinheiten in bestimmte Zustände oder Betriebsarten zu versetzen oder in sonstiger Weise Einfluß auf deren Verhalten zu nehmen. Soll dies geschehen, muß der Inhalt des oder der betreffenden Register entsprechend verändert werden. Zur Veränderung des Registerinhalts wird dieser ausgelesen, zur Steuereinheit übertragen, dort modifiziert, dann zur Peripherieeinheit zurückübertragen und schließlich wieder ins Register (unter Überschreiben des bisherigen Registerinhalts) zurückgespeichert. Obgleich zur gewünschten Einflußnahme nicht selten die Veränderung nur eines einzigen oder einiger weniger Bits des Registerinhalts genügt, betreffen die genannten Schritte der Einfachheit (Einheitlichkeit) halber meistens den gesamten Registerinhalt oder zumindest eine Vielzahl von Bits umfassende Einheiten (Worte) desselben.

Eine derartige Veränderung des Registerinhalts ist zwar schnell und einfach durchführbar, aber nicht ganz unproblematisch, denn neben den zu modifizierenden Bits des Registerinhalts werden ja auch die nicht zu modifizierenden Bits überschrieben. Zwar bereitet es keinerlei Schwierigkeiten, die nicht zu modifizierenden Bits mit genau den Werten zu überschreiben, die zuvor ausgelesen wurden, doch ist dies keine Garantie dafür, daß am Registerinhalt nur die zu modifizierenden Bits verändert werden. Hat sich der Registerinhalt nämlich (beispielsweise auf Veranlassung der Peripherieeinheit selbst oder sonstiger Einrichtungen) zwischen dem Auslesen und dem Überschreiben desselben verändert, so würden die nicht zu modifizierenden Bits des Registerinhalts nicht durch die Werte überschrieben werden, die sie gerade innehaben.

Dies ist verständlicherweise ein Nachteil, den es zu beseitigen gilt.

Eine Möglichkeit zur Vermeidung des genannten Effekts besteht darin, daß die Steuereinheit der Peripherieeinheit (beispielsweise durch Übermittlung einer Maske) mitteilt, welche Bits des Registerinhalts von der durchgeführten Modifikation betroffen sind, und daß die Peripherieeinheit daraufhin nur genau diese Bits im betreffenden Register überschreibt. Die Übertragung einer solchen Information ist jedoch mit einem erheblichen Zusatzaufwand verbunden und bei manchen Systemen überhaupt nicht möglich.

Der vorliegenden Erfindung liegt daher die Aufgabe zugrunde, das Verfahren gemäß dem Oberbegriff des Patentanspruchs 1 und die Vorrichtung gemäß dem Oberbegriff des Patentanspruchs 4 derart weiterzubilden, daß auf einfache Weise zuverlässig verhindert werden kann, daß zwischen dem Auslesen und dem Überschreiben erfolgte Veränderungen der in der Speichereinrichtung gespeicherten Daten unbeabsichtigt rückgängig gemacht werden.

Diese Aufgabe wird erfindungsgemäß durch die im kennzeichnenden Teil des Patentanspruchs 1 beanspruchten Merkmale (Verfahren) bzw. durch die im kennzeichnenden Teil des Patentanspruchs 4 beanspruchten Merkmale (Vorrichtung) gelöst.

Demnach ist vorgesehen,
- daß die ausgelesenen Daten und die modifizierten Daten vor dem Überschreiben der ausgelesenen Daten durch die modifizierten Daten miteinander verglichen und nur diejenigen Bestandteile der ausgelesenen Daten überschrieben werden, die sich von den modifizierten Daten unterscheiden (kennzeichnender Teil des Patentanspruchs 1) bzw.
- daß eine Überschreibeinrichtung vorgesehen ist, die dazu ausgelegt ist, die ausgelesenen Daten und die modifizierten Daten vor dem Überschreiben der ausgelesenen Daten durch die modifizierten Daten miteinander zu vergleichen und nur diejenigen Bestandteile der ausgelesenen Daten zu überschreiben, die sich von den modifizierten Daten unterscheiden (kennzeichnender Teil des Patentanspruchs 4).

Durch den Vergleich zwischen den ausgelesenen und den modifizierten Daten kann in der die Speichereinrichtung enthaltenden Einheit ohne entsprechende Information seitens der die Modifikation durchführenden Einheit festgestellt werden, welche Bestandteile der Daten durch die Modifikation verändert wurden. Das Überschreiben nur derjenigen Teile der Speichereinrichtung, die durch die Modifikation verändert wurden, läßt die von der Modifikation nicht betroffenen Teile der Speichereinrichtung unverändert. Zwischen den Auslesen und dem Überschreiben erfolgte Veränderungen der in der Speichereinrichtung gespeicherten Daten können mithin nicht unbeabsichtigt rückgängig gemacht werden.

Vorteilhafte Weiterbildungen der Erfindung sind Gegenstand der Unteransprüche.

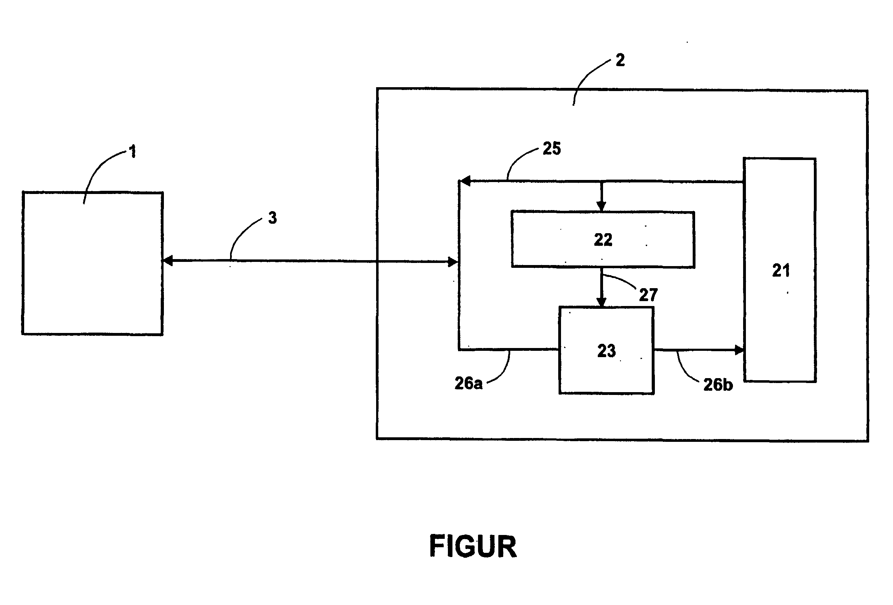

Die Erfindung wird nachfolgend anhand eines Ausführungsbeispiels unter Bezugnahme auf die Zeichnung näher erläutert.

Die Figur zeigt schematisch den Aufbau einer die erfindungsgemäße Vorrichtung enthaltenden und zur Durchführung des erfindungsgemäßen Verfahrens geeigneten Anordnung.

Die gezeigte Anordnung umfaßt eine zentrale Steuereinheit in Form eines Mikrocontrollers 1 und eine mit diesem über eine für bidirektionale Datentransfers ausgelegte Verbindungsleitung 3 verbundene Peripherieeinheit 2.

Anstelle des Mikrocontrollers 1 kann auch eine andere Steuereinheit, beispielsweise ein Mikroprozessor oder ein Signalprozessor verwendet werden; bei der an die zentrale Steuereinheit angeschlossenen Peripherieeinheit 2 kann es sich um eine beliebige an die betreffende Einheit anschließbare Peripherieeinheit handeln, also beispielsweise um einen Timer, eine externe Speichereinheit oder eine über die Steuereinheit zu steuernde Vorrichtung.

Die Peripherieeinheit 2 enthält eine Speichereinrichtung in Form eines Registers 21, eine Zwischenspeichereinrichtung 22, und eine Überschreibeinrichtung 23.

Im Register 21 seien eine Vielzahl von Bits (beispielsweise 16 Bits) umfassende Daten gespeichert. Die Bedeutung bzw. Verwendung der im Register 21 gespeicherten Daten ist beliebig; im betrachteten Beispiel sei das Register 21 ein sogenanntes special function register, dessen Inhalt als Steuerbefehle zur Ansteuerung der Peripherieeinheit 2 interpretiert werden.

Der Inhalt des Registers 21 ist auf Veranlassung durch den Mikrocontroller 1 veränderbar. Der Mikrocontroller 1 wird dadurch in die Lage versetzt, die Peripherieeinheit 2 durch eine nachfolgend noch genauer beschriebene Modifikation des Registerinhaltes zu steuern. Der Inhalt des Registers 21 kann aber auch auf Veranlassung beliebiger anderer Einrichtungen (beispielsweise durch sonstige Steuereinheiten oder die Peripherieeinheit 2 selbst) verändert werden.

Will der Mikrocontroller 1 den Inhalt des Registers verändern, so veranlaßt er die Ausführung folgender Schritte:
1) Auslesen der im Register 21 gespeicherten Daten
2)
   a) Einschreiben der ausgelesenen Daten in der Zwischenspeichereinrichtung 22, und
   b) Übertragen der ausgelesenen Daten über eine Leseleitung 25 und die Verbindungsleitung 3 zum Mikrocontroller 1,
3) Modifizieren der erhaltenen Daten (im Mikrocontroller)
4) Übertragen der modifizierten Daten über die Verbindungsleitung 3 zur Peripherieeinheit 2, und
5) Überschreiben der im Register 21 gespeicherten Daten durch die modifizierten Daten, wobei jedoch ausschließlich diejenigen Teile des Registers überschrieben werden, die bei der Modifikation im Mikrocontroller 1 verändert wurden.

Das Auslesen des Registerinhalts (Schritt 1), das Einschreiben der ausgelesenen Daten in die Zwischenspeichereinrichtung und das Übertragen der ausgelesenen Daten von der Peripherieeinheit zum Mikrocontroller (Schritt 2), und das Übertragen der modifizierten Daten vom Mikrocontroller zur Peripherieeinheit (Schritt 4) erfolgen in mehrere Bits umfassenden Einheiten, beispielsweise in 16 Bits umfassenden Einheiten (16-Bit-Worten), wobei eine solche Einheit den gesamten Registerinhalt oder nur Teile desselben umfassen kann.

Der Mikrocontroller 1 ist über entsprechende Befehle veranlaßbar, beliebig auswählbare Bits innerhalb des erhaltenen Daten-Wortes auf bestimmte Werte zu setzen. Damit kann die Modifikation des Registerinhalts unabhängig von der Größe der Einheiten, in welchen er gehandhabt wird, auf diejenigen Bits beschränkt werden, die es zur Erzielung des gewünschten Erfolges (der gewünschten Ansteuerung) in vorbestimmter Weise einzustellen (zu setzen oder rückzusetzen) gilt; die von der Einstellung nicht betroffenen Bits werden durch die Modifikation des Registerinhalts (Schritt 3) nicht verändert, also (in Schritt 4) unverändert zur Peripherieeinheit zurückübertragen.

Die vom Mikrocontroller 1 zur Peripherieeinheit übertragenen modifizierten Daten gelangen dort über einen Schreibleitungsabschnitt 26a in die Überschreibeinrichtung 23, wo sie zunächst Bit für Bit mit den in der Zwischenspeichereinrichtung 22 gespeicherten und nun über die Leitung 27 ausgegebenen Daten verglichen werden.

Die in der Zwischenspeichereinrichtung 22 gespeicherten Daten sind die in Schritt 1 aus dem Register 21 ausgelesenen Daten; sie wurden - wie vorstehend bereits erwähnt wurde - in Schritt 2 in die Zwischenspeichereinrichtung 22 geschrieben.

Beim Vergleich der vom Mikrocontroller 1 zur Peripherieeinheit übertragenen Daten mit den in der Zwischenspeichereinrichtung 22 gespeicherten Daten werden also die durch den Mikrocontroller 1 modifizierten Daten mit den zuvor aus dem Register 21 ausgelesenen, d.h. noch nicht modifizierten Daten verglichen. Dabei wird festgestellt, welche Bestandteile (Bits) des ursprünglichen Registerinhalts durch die Modifikation im Mikrocontroller verändert wurden.

Diese Feststellung wird dahingehend ausgenutzt, daß vom Register 21 in Schritt 5 (über den Schreibleitungsabschnitt 26b) nur diejenigen Bits überschrieben werden, die sich durch die Modifikation des Registerinhalts in Schritt 3 verändert haben.

Das Überschreiben der einzelnen Bits kann dabei in aufeinanderfolgenden Überschreibvorgängen, oder unter Verwendung einer basierend auf dem Vergleich in der Überschreibeinrichtung generierten Maske erfolgen.

Weil auf die beschriebene Art und Weise nur diejenigen Bits des Registers 21 überschrieben werden, die sich durch die Modifikation durch den Mikrocomputer verändert haben, behalten die restlichen Bits des Registerinhalts ihren momentanen Zustand bei. Bits, die zwischen dem Auslesen des Registerinhalts in Schritt 1 und dem Überschreiben desselben in Schritt 5 (beispielsweise durch die Peripherieeinheit oder sonstige Einrichtungen) verändert wurden, werden - anders als bisher - nicht wieder in den Zustand zurückversetzt, den sie beim Auslesen des Registerinhalts innehatten. Die Modifikation des Registerinhalts durch den Mikrocontroller kann dadurch keine unbeabsichtigte Beeinflussung (Störung) der Funktion und/oder Arbeitsweise der Peripherieeinheit 2 zur Folge haben.

Bei den vorstehenden Erläuterungen wurde davon ausgegangen, daß ein Bit die kleinste zusammenhängende Einheit ist, die im Register 21 überschrieben werden kann. Wenngleich dies derzeit als Optimum angesehen wird, besteht hierauf keine Einschränkung. Die kleinste zusammenhängende Einheit kann auch ein beliebig größerer Bestandteil des Registerinhalts, beispielsweise ein Byte desselben sein.

Die kleinste zusammenhängende Einheit beim Überschreiben des Registerinhalts und die Einheiten, in welchen der modifizierte Registerinhalt und der zuvor ausgelesene Registerinhalt verglichen werden, stimmen vorzugsweise überein, wobei dies jedoch keine zwingende Voraussetzung für die ordnungsgemäße Funktion des beschriebenen Gegenstandes darstellt.

Durch das beschriebene Verfahren und die beschriebene Vorrichtung kann unabhängig von den Einzelheiten der praktischen Realisierung derselben auf äußerst einfache Art und Weise verhindert werden, daß zwischen dem Auslesen und dem Überschreiben erfolgte Veränderungen der in der Speichereinrichtung gespeicherten Daten unbeabsichtigt rückgängig gemacht werden.

## Patentansprüche

1. Verfahren zum Auslesen von in einer Speichereinrichtung (21) gespeicherten Daten, Modifizieren derselben und Überschreiben der ausgelesenen Daten durch die modifizierten Daten,
**dadurch gekennzeichnet,**
**daß** die ausgelesenen Daten und die modifizierten Daten vor dem Überschreiben der ausgelesenen Daten durch die modifizierten Daten miteinander verglichen und nur diejenigen Bestandteile der ausgelesenen Daten überschrieben werden, die sich von den modifizierten Daten unterscheiden.

2. Verfahren nach Anspruch 1,
**dadurch gekennzeichnet,**
**daß** die ausgelesenen Daten unmittelbar nach dem Auslesen in eine Zwischenspeichereinrichtung (22) geschrieben werden, und
**daß** beim Vergleich der modifizierten Daten mit den ausgelesenen Daten die modifizierten Daten mit den in der Zwischenspeichereinrichtung gespeicherten Daten verglichen werden.

3. Verfahren nach Anspruch 1 oder 2,
**dadurch gekennzeichnet,**
**daß** die Daten außerhalb der Einrichtung (2) modifiziert werden, welche die Speichereinrichtung (21) und die das Überschreiben derselben durchführende Überschreibeinrichtung (23) enthält.

4. Vorrichtung zum Auslesen von in einer Speichereinrichtung (21) gespeicherten Daten, Modifizieren derselben und Überschreiben der ausgelesenen Daten durch die modifizierten Daten,
**gekennzeichnet durch,**
eine Überschreibeinrichtung (23), die dazu ausgelegt ist, die ausgelesenen Daten und die modifizierten Daten vor dem Überschreiben der ausgelesenen Daten **durch** die modifizierten Daten miteinander zu vergleichen und nur diejenigen Bestandteile der ausgelesenen Daten zu überschreiben, die sich von den modifizierten Daten unterscheiden.

5. Vorrichtung nach Anspruch 4,
**dadurch gekennzeichnet,**
**daß** die Speichereinrichtung (21) und die Überschreibeinrichtung (23) Bestandteil einer von einer zentralen Steuereinheit (1) gesteuerten Peripherieeinheit (2) sind.

6. Vorrichtung nach Anspruch 4 oder 5,
**dadurch gekennzeichnet,**
**daß** die die Speichereinrichtung (21) und die Überschreibeinrichtung (23) enthaltende Einrichtung (2) und die die ausgelesenen Daten modifizierende Einrichtung (1) separate Einrichtungen sind.

7. Vorrichtung nach Anspruch 5 oder 6,
**dadurch gekennzeichnet,**
**daß** die die ausgelesenen Daten modifizierende Einrichtung (1) eine zentrale Steuereinheit ist, die dazu ausgelegt ist, die die Speichereinrichtung (21) und die Überschreibeinrichtung (23) enthaltende Einrichtung (2) zu steuern.

8. Vorrichtung nach einem oder mehreren der Ansprüche 4 bis 7,
**dadurch gekennzeichnet,**
**daß** die die Speichereinrichtung (21) und die Überschreibeinrichtung (23) enthaltende Einrichtung (2) eine Zwischenspeichereinrichtung (22) zur Zwischenspeicherung der aus der Speichereinrichtung ausgelesenen Daten enthält.

9. Vorrichtung nach einem oder mehreren der Ansprüche 4 bis 8,
**dadurch gekennzeichnet,**
**daß** die Überschreibeinrichtung (23) dazu ausgelegt ist, ein oder mehrere ausgewählte Bits der Speichereinrichtung (21) zu überschreiben.

## Claims

1. Method of reading out data stored in a storage device (21), modifying said data and overwriting the data read out with the modified data,
**characterized in that**
the data read out and the modified data are compared with one another before the data read out are overwritten with the modified data, and only those components of the data read out which differ from the modified data are overwritten.

2. Method according to Claim 1,
**characterized in that**
the data read out are written to a buffer storage device (22) immediately after being read out, and
**in that**, for comparing the modified data with the data read out, the modified data are compared with the data stored in the buffer storage device.

3. Method according to Claim 1 or 2,
**characterized in that**
the data are modified outside the device (2) containing the storage device (21) and the overwriting device (23) which overwrites the same.

4. Apparatus for reading out data stored in a storage device (21), modifying said data and overwriting the data read out with the modified data,
**characterized by**
an overwriting device (23) designed to compare the data read out and the modified data with one another before the data read out are overwritten with the modified data, and to overwrite only those components of the data read out which differ from the modified data.

5. Apparatus according to Claim 4,
**characterized in that**
the storage device (21) and the overwriting device (23) are a constituent part of a peripheral unit (2) controlled by a central control unit (1).

6. Apparatus according to Claim 4 or 5,
**characterized in that**
the device containing the storage device (21) and the overwriting device (23), and the device (1) which modifies the data read out, are separate devices.

7. Apparatus according to Claim 5 or 6,
**characterized in that**
the device (1) which modifies the data read out is a central control unit designed to control the device (2) containing the storage device (21) and the overwriting device (23).

8. Apparatus according to one or more of Claims 4 to 7,
**characterized in that**
the device (2) containing the storage device (21) and the overwriting device (23) contains a buffer storage device (22) for temporarily storing the data read out of the storage device.

9. Apparatus according to one or more of Claims 4 to 8,
**characterized in that**
the overwriting device (23) is designed to overwrite one or more selected bits of the storage device (21).

## Revendications

1. Procédé pour la sélection de données enregistrées dans un dispositif de sauvegarde (21), la modification de celles-ci et l'écrasement des données sélectionnées par les données modifiées, **caractérisé en ce que** les données sélectionnées et les données modifiées sont comparées les unes avec les autres avant l'écrasement des données sélectionnées par les données modifiées, et **en ce que** seuls sont écrasés les éléments constitutifs des données sélectionnées, qui diffèrent des données modifiées.

2. Procédé selon la revendication 1, **caractérisé en ce que** les données sélectionnées sont inscrites dans un dispositif de stockage intermédiaire (22) juste après la sélection, et **en ce que** lors de la comparaison des données modifiées avec les données sélectionnées, les données modifiées sont comparées avec les données enregistrées dans le dispositif de stockage intermédiaire.

3. Procédé selon l'une quelconque des revendications 1 ou 2, **caractérisé en ce que** les données sont modifiées en-dehors du dispositif (2) comportant le dispositif de sauvegarde (21) et le dispositif d'écrasement des données (23) réalisant l'écrasement de celles-ci.

4. Dispositif pour la sélection de données enregistrées dans un dispositif de sauvegarde (21), la modification de celles-ci et l'écrasement des données sélectionnées par les données modifiées, **caractérisé par** un dispositif d'écrasement des données (23) prévu pour comparer les unes avec les autres les données sélectionnées et les données modifiées avant l'écrasement des données sélectionnées par les données modifiées, et prévu pour écraser seulement ceux des éléments constitutifs des données sélectionnées, qui diffèrent des données modifiées.

5. Dispositif selon la revendication 4, **caractérisé en ce que** le dispositif de sauvegarde (21) et le dispositif d'écrasement des données (23) sont parties constituantes d'une unité périphérique (2) commandée par une unité de commande centrale (1).

6. Dispositif selon l'une quelconque des revendications 4 ou 5, **caractérisé en ce que** le dispositif (2) comprenant le dispositif de sauvegarde (21) ainsi que le dispositif d'écrasement des données (23) et le dispositif (1) qui modifie les données sélectionnées sont des dispositifs indépendants.

7. Dispositif selon l'une quelconque des revendications 5 ou 6, **caractérisé en ce que** le dispositif (1) qui modifie les données sélectionnées est une unité de commande centrale prévue pour commander le dispositif (2) comprenant le dispositif de sauvegarde (21) et le dispositif d'écrasement des données (23).

8. Dispositif selon l'une quelconque ou plusieurs des revendications 4 à 7, **caractérisé en ce que** le dispositif (2) comprenant le dispositif de sauvegarde (21) et le dispositif d'écrasement des données (23) comporte un dispositif de stockage intermédiaire (22) pour le stockage intermédiaire des données sélectionnées dans le dispositif de sauvegarde.

9. Dispositif selon l'une quelconque ou plusieurs des revendications 4 à 8, **caractérisé en ce que** le dispositif d'écrasement des données (23) est prévu pour l'écrasement d'un ou plusieurs bits choisis du dispositif de sauvegarde (21).
